# EUROPEAN PATENT APPLICATION

(11) **EP 4 826 358 A1**
(43) Date of publication of application: **21.10.2026**
(21) Application number: 24925495.4
(22) Date of filing: 19.09.2024
(51) Int. Cl.: G01N 21/01, H01M 10/04, G01N 21/892

(54) **FILM COATING DEVICE AND FILM COATING METHOD**

(30) Priority: 23.02.2024 CN 202410200005
(71) Applicant: Contemporary Amperex Technology Co., Limited, Ningde, Fujian 352100 (CN)
(72) Inventor: CHEN, Yong, Ningde, Fujian 352100 (CN); JIANG, Ping, Ningde, Fujian 352100 (CN); LI, Hongyuan, Ningde, Fujian 352100 (CN)
(74) Representative: Lorenz Seidler Gossel Part. mbB
(86) International application number: PCT/CN2024/119827
(87) International publication number: WO 2025/175755

(57) **Abstract**

The present application discloses a film coating device and a film coating method. A magnetic drive conveying device drives a battery cell to move; and during movement of the battery cell, a position of a magnetic levitation mover is determined on the basis of preset positions in a magnetic levitation guide rail, and the position of the magnetic levitation mover is used as the position of the battery cell to be transmitted to an encoder, such that the encoder outputs a pulse signal on the basis of the change in the position of the magnetic levitation mover to trigger an image collection device to perform image collection on the battery cell. Compared with a conventional mode of controlling a line scan camera to perform image collection on a battery cell on the basis of a grating ruler and a grating encoder, the solution provided by embodiments of the present application has less requirements on installation precision, is easier to implement, and is less affected by the environment, thereby making an imaging result more accurate.

## Description

### CROSS-REFERENCE TO RELATED APPLICATIONS

The present application claims priority to Chinese Patent Application No. 202410200005.2, filed on February 23, 2024 and entitled "Film Coating Device and Film Coating Method", which is incorporated herein by reference in its entirety.

### TECHNICAL FIELD

The present application relates to the field of battery manufacturing, and in particular, to a film coating device and a film coating method.

### BACKGROUND

At present, in a film coating and case-encasing process, it is necessary to collect images of a battery cell to determine whether a film layer coated on the surface of the battery cell has defects. In the related art, the battery cell is mainly driven to move by a carrier, and a grating ruler on the carrier is read by a grating encoder reading head during the movement, such that a line scan camera is controlled to collect the image of the battery cell, and the defect detection is performed on the film layer based on the image. However, this method has a high requirement on the mounting of the grating ruler and the read head, and is not easy to implement, and the grating ruler is contaminated, which easily leads to inaccurate image output.

### SUMMARY

Embodiments of the present application provide a film coating device and method, to reduce the difficulty of collecting an image of a battery cell in a film coating and case-encasing process, and improve the accuracy of the image of the battery cell.

In a first aspect, an embodiment of the present application provides a film coating device, including: a magnetic drive conveying device, an encoder, and an image collection device, where
the magnetic drive conveying device includes: a magnetic levitation mover, a magnetic levitation guide rail, and a position detection module;
the magnetic levitation mover is configured to carry a battery cell, and a surface of the battery cell is coated with a film layer;
the magnetic levitation guide rail is configured to drive the magnetic levitation mover to convey the battery cell in a conveying direction;
a plurality of preset positions are disposed on the magnetic levitation guide rail in the conveying direction;
the position detection module is configured to determine a position of the magnetic levitation mover based on the plurality of preset positions and send the position of the magnetic levitation mover to the encoder during the process of conveying the battery cell by the magnetic drive conveying device;
the encoder is configured to generate a pulse signal based on the position of the magnetic levitation mover, and send the pulse signal to the image collection device; and
the image collection device is configured to acquire an image of the battery cell based on the pulse signal.

In the technical solution of this embodiment, the magnetic drive conveying device is used to drive the battery cell to move, and during the movement of the battery cell, the position of the magnetic levitation mover is determined based on the preset position in the magnetic levitation guide rail, and the position of the magnetic levitation mover is transmitted to the encoder as the position of the battery cell, such that the encoder outputs a pulse signal based on a position change of the magnetic levitation mover to trigger the image collection device to perform image collection on the battery cell. Compared with a conventional manner for controlling a line scan camera to perform image collection on a battery cell based on a grating ruler and a grating encoder, the solution provided in embodiments of the present application has a lower requirement on mounting precision, is easier to implement, and is less affected by an environment, such that an image is obtained more accurately.

In some embodiments, the position detection module includes a controller and a plurality of position sensors arranged in sequence along the magnetic levitation guide rail, and the plurality of position sensors are in one to-one correspondence with the plurality of preset positions of the magnetic levitation guide rail;
the position sensor is configured to send an induction signal to the controller when sensing the magnetic levitation mover; and
the controller is configured to use a preset position corresponding to a last received induction signal as the position of the magnetic levitation mover, and send the position of the magnetic levitation mover to the encoder, wherein the preset position corresponding to the induction signal is a preset position corresponding to a position sensor that sends the induction signal.

In this way, the position of the magnetic levitation mover may be detected.

In some embodiments, the image collection device is disposed on a side surface of the magnetic drive conveying device, and an optical axis of the image collection device is perpendicular to and intersects with a detection surface of the battery cell;
the plurality of position sensors include a start position sensor and an end position sensor;
the start position sensor is mounted at a first preset position of the magnetic levitation guide rail, the first preset position is on an upstream side of an image collection position, a distance between the first preset position and the image collection position is a first distance, and the image collection position is a position where the magnetic levitation guide rail intersects with a parallel line of the optical axis of the image collection device;
the end position sensor is mounted at a second preset position of the magnetic levitation guide rail, the second preset position is on a downstream side of the image collection position, a distance between the second preset position and the image collection position is a second distance, and the second distance is greater than or equal to a length of the detection surface of the battery cell; and
the controller is further configured to send the position of the magnetic levitation mover to the encoder once in each preset time period starting from the reception of an induction signal sent by the start position sensor, until an induction signal sent by the end position sensor is received.

In this way, the encoder may output the pulse signal to the image collection device from the position where the magnetic levitation mover reaches the first preset position to the position where the magnetic levitation mover reaches the second preset position, that is, the encoder outputs the pulse signal when the magnetic levitation mover passes through the image collection device, such that the image collection device may acquire a complete image of the battery cell during the movement of the magnetic levitation mover.

In some embodiments, the encoder is further configured to determine a displacement of the magnetic levitation mover based on the received position of the magnetic levitation mover in each preset time period, and generate a pulse signal corresponding to the number of pulses by using a ratio of the displacement to a resolution of the encoder as the number of pulses.

In this way, the pulse signal corresponding to a displacement change of the battery cell may be obtained in each preset time period, such that the image collection device is controlled by the pulse signal to perform image collection on the battery cell at a certain frequency.

In some embodiments, the controller is further configured to calculate the position of the magnetic levitation mover based on a preset check algorithm to obtain a first check code, and send the position of the magnetic levitation mover and the first check code to the encoder; and
the encoder is further configured to: calculate the received position of the magnetic levitation mover based on the check algorithm to obtain a second check code, compare the second check code with the received first check code, and generate a pulse signal based on the position of the magnetic levitation mover in a case where the second check code is consistent with the first check code.

In this way, the accuracy and integrity of the position of the magnetic levitation mover may be improved.

In some embodiments, the image collection device comprises a line scan camera; and
the image collection device is further configured to acquire one row of images each time one pulse is received, and in a case where a row height of the collected images is equal to a preset row height, combine the collected images into one image, and use the combined image as an image of the detection surface of the battery cell.

In this way, the image collection device may output a complete image of the detection surface of the battery cell based on the pulse signal outputted by the encoder in combination with the set preset row height when the magnetic levitation mover moves, the image is stable, and the object detected by the image collection device completely corresponds to a real measurement object, which is beneficial to the accurate calibration of data.

In a second aspect, an embodiment of the present application provides a film coating method, including:
placing a battery cell on a magnetic levitation mover, where a surface of the battery cell is coated with a film layer;
driving the magnetic levitation mover to convey the battery cell in a conveying direction by a magnetic levitation guide rail;
during a process of conveying the battery cell by the magnetic levitation mover, determining a position of the magnetic levitation mover based on a plurality of preset positions in the magnetic levitation guide rail by a position detection module, and sending the position of the magnetic levitation mover to an encoder;
generating, by the encoder, a pulse signal based on the position of the magnetic levitation mover, and sending the pulse signal to an image collection device; and
collecting, by the image collection device, an image of the battery cell based on the pulse signal.

In the technical solution of this embodiment, the magnetic drive conveying device is used to drive the battery cell to move, and during the movement of the battery cell, the position of the magnetic levitation mover is determined based on the preset position in the magnetic levitation guide rail, and the position of the magnetic levitation mover is transmitted to the encoder as the position of the battery cell, such that the encoder outputs a pulse signal based on a position change of the magnetic levitation mover to trigger the image collection device to perform image collection on the battery cell. Compared with a conventional manner for controlling a line scan camera to perform image collection on a battery cell based on a grating ruler and a grating encoder, the solution provided in embodiments of the present application has a lower requirement on mounting precision, is easier to implement, and is less affected by an environment, such that an image is obtained more accurately.

In some embodiments, the position detection module includes a controller and a plurality of position sensors arranged in sequence along the magnetic levitation guide rail, the plurality of position sensors are in one to-one correspondence with a plurality of preset positions in the magnetic levitation guide rail, and the position sensors are configured to send an induction signal when sensing the magnetic levitation mover; and
determining, by the position detection module, the position of the magnetic levitation mover based on the plurality of preset positions in the magnetic levitation guide rail includes:
using, by the controller, a preset position corresponding to a last received induction signal as the position of the magnetic levitation mover, wherein the preset position corresponding to the induction signal is a preset position corresponding to the position sensor that sends the induction signal.

In this way, the position of the magnetic levitation mover may be detected.

In some embodiments, the plurality of position sensors comprise a start position sensor and an end position sensor, and sending the position of the magnetic levitation mover to the encoder includes:
sending the position of the magnetic levitation mover to the encoder once in each preset time period starting from the reception of the induction signal sent by the start position sensor, until the induction signal sent by the end position sensor is received.

In this way, the encoder may output the pulse signal to the image collection device from the position where the magnetic levitation mover reaches the first preset position to the position where the magnetic levitation mover reaches the second preset position, that is, the encoder outputs the pulse signal when the magnetic levitation mover passes through the image collection device, such that the image collection device may acquire a complete image of the battery cell during the movement of the magnetic levitation mover.

In some embodiments, generating, by the encoder, a pulse signal based on the position of the magnetic levitation mover includes:
determining a displacement of the magnetic levitation mover based on the position of the magnetic levitation mover in each preset time period;
determining a ratio of the displacement to a resolution of the encoder as the number of pulses; and
generating a pulse signal corresponding to the number of pulses.

In this way, the pulse signal corresponding to a displacement change of the battery cell may be obtained in each preset time period, such that the image collection device is controlled by the pulse signal to perform image collection on the battery cell at a certain frequency.

In some embodiments, sending the pulse signal to the image collection device includes:
sending the pulse signal to the image collection device in a differential transmission manner.

In this way, the anti-interference capability of the pulse signal may be increased.

In some embodiments, sending the position of the magnetic levitation mover to the encoder includes:
calculating, by the position detection module, the position of the magnetic levitation mover based on a preset check algorithm to obtain a first check code; and
sending the position of the magnetic levitation mover and the first check code to the encoder;
generating, by the encoder, the pulse signal based on the position of the magnetic levitation mover includes:
   calculating, by the encoder, the received position of the magnetic levitation mover based on the check algorithm to obtain a second check code;
   comparing the second check code with the received first check code; and
   generating a pulse signal based on the position of the magnetic levitation mover in a case where the second check code is consistent with the first check code.

In this way, the accuracy and integrity of the position of the magnetic levitation mover may be improved.

In some embodiments, the image collection device comprises a line scan camera, and collecting, by the image collection device, an image of a detection surface of the battery cell based on the pulse signal includes:
collecting, by the image collection device, one row of images each time one pulse is received;
in a case where a row height of the collected image is equal to a preset row height, forming the collected images into an image; and
using the formed image as the image of the detection surface of the battery cell.

In this way, the image collection device may output a complete image of the detection surface of the battery cell based on the pulse signal outputted by the encoder in combination with the set preset row height when the magnetic levitation mover moves, the image is stable, and the object detected by the image collection device completely corresponds to a real measurement object, which is beneficial to the accurate calibration of data.

In some embodiments, prior to collecting, by the image collection device, the image of the detection surface of the battery cell based on the pulse signal, the method further includes:
determining a fourth distance between the start position sensor and the end position sensor;
collecting a scanning error of the image collection device; and
determining the preset row height of the image collection device based on the fourth distance, the scanning error, and the resolution of the encoder.

In this way, the image collection device may output a complete and accurate battery cell image.

### BRIEF DESCRIPTION OF THE DRAWINGS

In order to more clearly describe the technical solutions of the embodiments of the present application, the accompanying drawings required for describing the embodiments of the present application will be briefly described below. Apparently, the accompanying drawings described below are only some embodiments of the present application. Those of ordinary skill in the art may further derive other drawings from these accompanying drawings without creative efforts.
FIG. 1 is a schematic diagram of a film coating device provided by an embodiment of the present application.
FIG. 2 is a layout top view of a film coating device provided by an embodiment of the present application.
FIG. 3 is a schematic diagram of a preset position in a magnetic levitation guide rail provided by an embodiment of the present application.
FIG. 4 is an architecture schematic diagram of electrical control provided by an embodiment of the present application.
FIG. 5 is a schematic diagram of pulse generation provided by an embodiment of the present application.
FIG. 6 is an architecture schematic diagram of electrical control provided by an embodiment of the present application.
FIG. 7 is a flowchart of a film coating method provided by an embodiment of the present application.

### DETAILED DESCRIPTION OF PREFERRED EMBODIMENTS

The features and exemplary embodiments of various aspects of the present application will be described in detail below. To make the objectives, technical solutions and advantages of the present application clearer, the present application will be further described in detail below with reference to the accompanying drawings and specific embodiments. It should be understood that the specific embodiments described herein are only intended to explain the present application, and not to limit the present application. For those skilled in the art, the present application can be implemented without some of these specific details. The following description of the embodiments is merely intended to provide a better understanding of the present application by illustrating examples of the present application.

It should be noted that, in this document, relational terms such as "first" and "second" are only used to distinguish one entity or operation from another entity or operation, and do not necessarily require or imply that there is any such actual relationship or order between these entities or operations. Moreover, the terms "comprise", "include" or any other variations thereof are intended to cover a nonexclusive inclusion, such that a process, method, article or device that includes a series of elements not only includes those elements, but also includes other elements not explicitly listed, or includes elements inherent to such a process, method, article or device. Without further limitation, the element defined by the phrase "comprising..." does not exclude the presence of additional identical elements in the process, method, article, or device that comprises the element.

At present, batteries are mainly used in electric vehicles and energy storage systems, and the market size of batteries is huge. Improving the efficiency of battery production may effectively increase the market share of enterprises and improve competitiveness. In the battery production process, it is necessary to add a battery cell blue film and Mylar (i.e., polyester film) to the battery in the film coating and case-encasing process, where the battery cell blue film is used to separate battery cells from each other, and to block the influence of a single battery cell on other battery cells due to various faults. Mylar is used to avoid direct contact between the bare battery cell and the battery housing, to protect the battery cell and achieve an insulation function. Due to the damage of the film layer and the metal particles on the surface, the battery electrode sheet may be pierced, and a short circuit is formed to cause the battery to explode and ignite. Therefore, it is necessary to detect the metal particles on the surface of the film layer and the welding effect of Mylar in the case-encasing process of the battery.

In the related art, the detection method for the film layer of the battery cell mainly includes collecting an image of the battery cell by a line scan camera, and determining whether the film layer has a defect based on the collected image, and generally, when a complete image of the battery cell cannot be collected, it will be directly determined that the film layer of the battery cell has a problem. The method of collecting the battery cell image mainly includes placing the battery cell on a carrier, driving the battery cell to move by the carrier, and reading a grating ruler on the carrier by a grating encoder read head during the movement, so as to output a corresponding differential pulse to a line scan camera, and the line scan camera acquires the image of the battery cell based on the differential.

The key point of collecting the battery cell image in the above manner is that the grating encoder can provide a stable and effective pulse signal, such that the mounting accuracy of the grating ruler and the read head is required to be high, the flatness of the mounting surface of the read head and the grating ruler is usually required to be not greater than ± 1°, and the spacing between the read head and the grating ruler is required to be 1.95±0.15 mm, while the production line usually includes a plurality of carriers, and it is necessary to ensure that the grating ruler on each carrier meets the requirements during mounting and debugging, which requires a lot of manpower and time, and is not easy to implement. Moreover, in the process of use, since the grating ruler is exposed to the field, oil dirt or dust in the device in subsequent use may cause the grating ruler to fail, such that the number of pulses outputted by the grating ruler is reduced, resulting in failure of image output, inaccurate detection results, and affecting the yield of the entire line.

In order to solve the problems in the prior art, embodiments of the present application provide a film coating device and a film coating method. The film coating device provided by the embodiment of the present application will be introduced below first.

The film coating device provided by the embodiment of the present application may be applied to a film coating and case-encasing process in a battery production process.

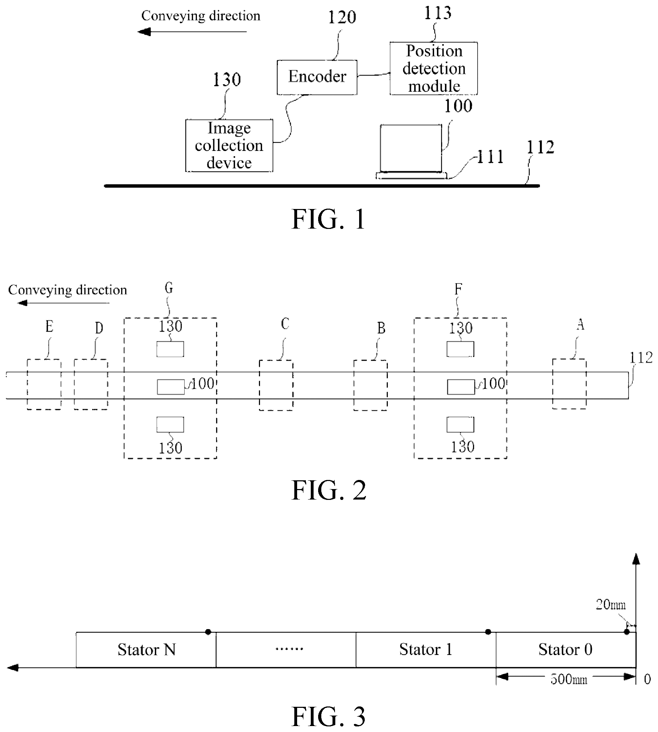

Referring to FIG. 1, FIG. 1 is a schematic structural diagram of a film coating device provided by an embodiment of the present application. As shown in FIG. 1, the film coating device may include: a magnetic drive conveying device, an encoder 120, and an image collection device 130.

The magnetic drive conveying device includes: a magnetic levitation mover 111 and a magnetic levitation guide rail 112. The magnetic levitation mover 111 is configured to carry a battery cell 100, and the magnetic levitation guide rail 112 is configured to drive the magnetic levitation mover 111 to convey the battery cell 100 in a conveying direction, such that the battery cell 100 may be driven to move by the magnetic drive conveying device.

In this embodiment, the conveying direction may be set according to actual conditions, for example, may be a left-to-right direction, a right-to-left direction, an up-to-down direction, or a down-to-up direction, which is not limited in this embodiment.

The magnetic levitation guide rail 112 may include a magnetic conveying line rail, such as a permanent magnet rail or an electromagnetic rail. The magnetic levitation mover 111 may include a magnetic carrier, such as a magnetic base or a magnetic vehicle. These magnetic carriers can be driven by a magnetic force on a conveyor line track to realize a contactless suspension movement.

In this embodiment, a surface of the battery cell 100 is coated with a film layer, and the film layer may include, but is not limited to, a battery cell blue film and Mylar. The film coating device may be applied to a film coating and case-encasing process of a battery, and is configured to perform image collection on a battery cell whose surface is coated with a battery cell blue film before Mylar is coated, and/or perform image collection on a battery cell whose surface is coated with Mylar after Mylar is coated.

Exemplarily, referring to FIG. 2, FIG. 2 is a layout top view of the film coating device. As shown in FIG. 2, the film coating system includes a magnetic levitation guide rail 112, a core-assembling feeding station A, a Mylar hot-melt coating station B, a gluing station C, a shell feeding station D and a feeding station E are sequentially arranged around the magnetic levitation guide rail 112 in the conveying direction, and when the battery cell 100 moves on the magnetic levitation guide rail 112 in the conveying direction, the battery cell 100 may sequentially pass through the core-assembling feeding station A, the Mylar hot-melt coating station B, the gluing station C, the shell feeding station D, and the feeding station E. In order to realize the visual inspection of the battery cell 100 conveyed on the magnetic levitation guide rail 112, a pre-Mylar coating visual inspection station F is further provided between the core-assembling feeding station A and the Mylar coating hot-melt station B, the pre-Mylar coating visual inspection station F includes two image collection devices 130 oppositely arranged on both sides of the magnetic levitation guide rail 112, a post-Mylar coating visual inspection station G is further provided between the gluing station C and the shell feeding station D, and the post-Mylar coating visual inspection station G also includes two image collection devices 130 oppositely arranged on both sides of the magnetic levitation guide rail 112. In this way, in the film coating process, when the battery cell 100 passes through the pre-Mylar coating visual inspection station F, the two image collection devices 130 disposed at the pre-Mylar coating visual inspection station F may be used to perform image collection on the two surfaces of the battery cell 100 in the first direction, and the first direction is perpendicular to the conveying direction, so as to obtain the first surface image of the battery cell 100 before the Mylar film is coated, and thus, based on the first surface image, the defect detection may be performed on the surface of the blue film of the battery cell 100 before the Mylar film is coated. When the battery cell 100 passes through the post-Mylar coating visual inspection station G, the two image collection devices 130 disposed at the post-Mylar visual inspection station G may be used to perform image collection on the two surfaces of the battery cell 100 in the first direction, so as to obtain the second surface image of the battery cell 100 after the Mylar film is coated, and thus, the defect inspection may be performed on the Mylar surface coated on the surface of the battery cell 100 based on the collected second surface image.

Further, the magnetic levitation guide rail 112 is provided with a plurality of preset positions in the conveying direction, and each preset position has a known fixed coordinate.

In this embodiment, the magnetic levitation guide rail 112 may include a plurality of magnetic levitation stators sequentially arranged in the conveying direction, and when the magnetic drive conveying device is in operation, the magnetic levitation stators may generate a set of alternating magnetic fields on the surface of the magnetic levitation guide rail 112, thereby driving the magnetic levitation movers on the magnetic levitation guide rail 112 to move at a high speed, so as to realize the transfer and conveying of the materials on the production line. As shown in FIG. 3, taking the direction from right to left as the conveying direction as an example, the magnetic levitation guide rail 112 may include a plurality of magnetic levitation stators 0-N sequentially arranged in the conveying direction, each magnetic levitation stator is provided with a preset position at the same position, the right edge of the magnetic levitation stator arranged first in the conveying direction corresponds to the coordinate 0 point, assuming that the size of each magnetic levitation stator is 500 mm, and each magnetic levitation stator is provided with a preset position at a position 20 mm away from the own right edge thereof, then the coordinate of the preset position in the magnetic levitation stator arranged first is 20 mm, the coordinate of the preset position in the magnetic levitation stator arranged second is 500 mm+20 mm, and by parity of reasoning, the coordinates corresponding to the preset positions can be determined respectively.

The magnetic levitation conveying device further includes a position detection module 113, and the position detection module 113 is configured to determine a position of the magnetic levitation mover 111 based on a plurality of preset positions on the magnetic levitation guide rail 112 during the process of conveying the battery cell 100 by the magnetic levitation conveying device.

In this embodiment, the battery cell 100 is placed on the magnetic levitation mover 111 and moves as the magnetic levitation mover 111 moves, such that the position of the magnetic levitation mover 111 may be used as the position of the battery cell 100. The magnetic levitation mover 111 is levitated and moved on the magnetic levitation guide rail 112 in the conveying direction, and during the movement, the change of the magnetic levitation mover 111 in the conveying direction may be reflected according to the change of the position of a vertical projection point of the magnetic levitation mover 111 on the magnetic levitation guide rail 112, such that the position of the vertical projection point of the magnetic levitation mover 111 on the magnetic levitation guide rail 112 may be used as the position of the magnetic levitation mover 111. Based on this, a plurality of preset positions are set on the magnetic levitation guide rail 112 in the conveying direction, and the position detection module 113 may determine the position corresponding to the vertical projection point of the magnetic levitation mover 111 on the magnetic levitation guide rail 112 based on the plurality of preset positions, that is, determine the position of the magnetic levitation mover 111.

The position detection module 113 is further configured to send the position of the magnetic levitation mover 111 to the encoder 120.

The encoder 120 is configured to generate a pulse signal based on the position of the magnetic levitation mover 111 and send the pulse signal to the image collection device 130.

The image collection device 130 is configured to acquire an image of the battery cell 100 based on the pulse signal.

In this embodiment, the image collection device 130 may include a high-speed image collection device such as a line scan camera. The image collection device 130 is configured to perform image collection on the battery cell 100 in the process of the magnetic drive conveying device driving the battery cell 100 to move. In order to collect a complete battery cell image during the movement of the battery cell 100, during the movement of the battery cell 100, the position of the magnetic levitation mover 111 is collected by the position detection module 113 in the magnetic levitation conveying device, and the position is transmitted to the encoder 120 as the position of the battery cell 100, such that the encoder 120 controls the image collection device 130 to perform image scanning on the battery cell 100 at a high speed and at a certain frequency based on the position of the battery cell 100, thereby obtaining the complete battery cell image by photographing.

In the film coating device provided by the embodiment of the present application, the magnetic drive conveying device is configured to drive the battery cell 100 to move, and during the movement of the battery cell 100, the position of the magnetic levitation mover 111 is determined based on the preset position in the magnetic levitation guide rail 112, and the position of the magnetic levitation mover 111 is transmitted to the encoder 120 as the position of the battery cell 100, so that the encoder 120 outputs a pulse signal based on the position change of the magnetic levitation mover 111 to trigger the image collection device 130 to perform image collection on the battery cell 100. Compared with a conventional manner for controlling a line scan camera to perform image collection on a battery cell based on a grating ruler and a grating encoder, the solution provided in embodiments of the present application has a lower requirement on mounting precision, is easier to implement, and is less affected by an environment, such that an image is obtained more accurately.

In some embodiments, the position detection module 113 may include a controller 1131 and a plurality of position sensors sequentially arranged in the magnetic levitation guide rail, and the plurality of position sensors are in one to-one correspondence with the plurality of preset positions in the magnetic levitation guide rail 112, that is, one position sensor corresponds to one preset position. The position sensor is configured to send an induction signal to the controller when sensing the magnetic levitation mover 111. The controller 1131 is configured to take a preset position corresponding to the last received induction signal as the position of the magnetic levitation mover 111, and send the position of the magnetic levitation mover 111 to the encoder 120. The preset position corresponding to the induction signal is a preset position corresponding to the position sensor that sends the induction signal.

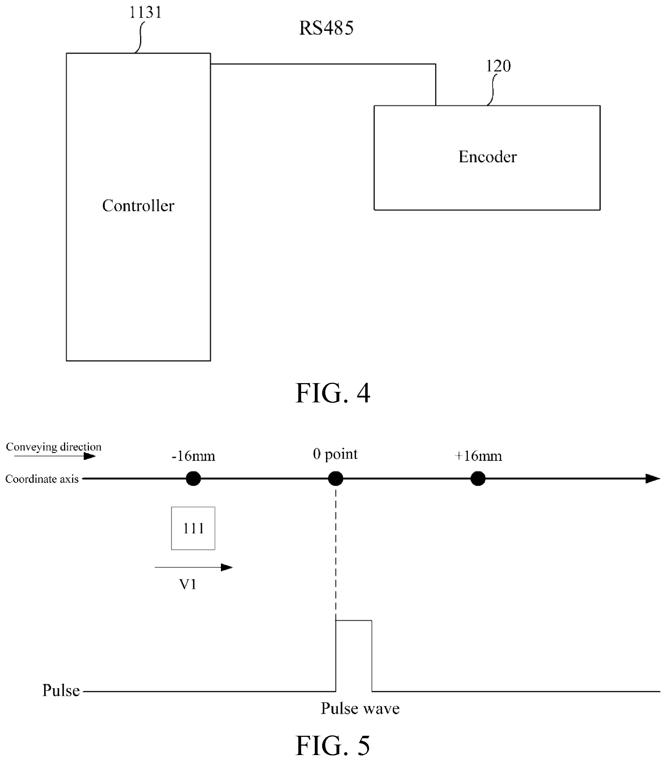

In this embodiment, the controller 1131 may be communicatively connected to the encoder 120, and send the position of the magnetic levitation mover 111 to the encoder 120 through an communication interface. As shown in FIG. 4, the controller 1131 may be communicatively connected to the encoder 120 by using a communication interface RS485.

In this embodiment, the position sensor may be a proximity position sensor, and for each position sensor, the position sensor may send an "action" signal, that is, an induction signal, when the magnetic levitation mover 111 and the position sensor approach to a set distance, such that the controller 1131 may determine that the magnetic levitation mover 111 and the position sensor are close to each other after receiving the induction signal sent by the position sensor, and based on this, the controller 1131 may determine the preset position corresponding to the magnetic levitation mover 111 based on the received induction signal, and then determine the position of the magnetic levitation mover.

In the above manner, the position of the magnetic levitation mover may be detected.

In some embodiments, the image collection device 130 is disposed on a side surface of the magnetic drive conveying device, and an optical axis of the image collection device 130 is perpendicular to and intersects with a detection surface of the battery cell 100. The detection surface of the battery cell 100 refers to a surface of the battery cell 100 on which image collection needs to be performed, and the detection surface of the battery cell 100 may be specified according to actual conditions, and one battery cell 100 may include one or more detection surfaces.

The plurality of position sensors of the position detection module 113 include a start position sensor and an end position sensor, the start position sensor is mounted at a first preset position of the magnetic levitation guide rail, the first preset position is on an upstream side of the image collection position and is at a first distance from the image collection position, the end position sensor is mounted at a second preset position of the magnetic levitation guide rail, the second preset position is on a downstream side of the image collection position and is at a second distance from the image collection position, and the second distance is greater than or equal to a length of the detection surface of the battery cell, where the image collection position is a position where the magnetic levitation guide rail intersects with a parallel line of an optical axis of the image collection device.

In this embodiment, the specific values of the first distance and the second distance may be set according to actual conditions, for example, the first distance may be 10 mm, and the second distance may be a size of one magnetic levitation mover 111 plus 10 mm, where the size of the magnetic levitation mover 111 is greater than or equal to the length of the detection surface of the battery cell 100, and in addition to the above values, the first distance and the second distance may also be other values, which is not specifically limited in this embodiment.

Based on the above arrangement, the controller 1131 sending the position of the magnetic levitation mover 111 to the encoder 120 may include: after the induction signal sent by the start position sensor is received, the position of the magnetic levitation mover is sent to the encoder once in each preset time period until the induction signal sent by the end position sensor is received and the sending is stopped.

In this embodiment, the preset time period may be set in the controller 1131 by controller software according to actual conditions, for example, the preset time period may be set to 1 ms or other time lengths, which is not specifically limited in this embodiment.

Exemplarily, referring to FIG. 5, a coordinate 0 point in FIG. 5 is used as a first preset position, a position of +16 mm is used as a second preset position, and when the magnetic levitation mover 111 moves to the right from the position of -16 mm, after the coordinate 0 point is passed, the controller 1131 collects the position of the magnetic levitation mover 111 at a preset time period of 1 ms and transmits the position to the encoder 120, and the encoder 120 performs pulse output based on the position of the magnetic levitation mover 111, and when the magnetic levitation mover 111 reaches the position of +16 mm, the controller 1131 no longer collects the position of the magnetic levitation mover 111, and the encoder 120 also stops pulse output, where there is at most one magnetic levitation mover 111 between the first preset position and the second preset position at any time.

In this embodiment, the encoder 120 generates the pulse signal based on the position of the magnetic levitation mover 111 sent by the controller 1131, such that the encoder 120 may output the pulse signal to the image collection device 130 from the moment when the magnetic levitation mover 111 reaches the first preset position to the moment when the magnetic levitation mover 111 reaches the second preset position, that is, the pulse signal is outputted by the encoder 120 when the magnetic levitation mover 111 passes through the image collection device 130, such that the image collection device 130 may acquire the complete image of the battery cell 100 during the movement of the magnetic levitation mover 111.

In some embodiments, the encoder 120 may determine a displacement of the magnetic levitation mover 111 based on the received position of the magnetic levitation mover 111 in each preset time period, and take a ratio of the displacement to the resolution of the encoder as the number of pulses, and generate a pulse signal corresponding to the number of pulses, thereby controlling the image collection device 130 to perform image collection based on the pulse signal.

In this embodiment, the displacement of the magnetic levitation mover 111 may be regarded as a displacement of the battery cell 100, such that in the above manner, the pulse signal corresponding to the displacement change of the battery cell 100 may be obtained in each preset time period, thereby controlling the image collection device 130 to perform image collection on the battery cell 100 at a certain frequency through the pulse signal.

In some embodiments of the present application, the encoder 120 may send the pulse signal to the image collection device 130 in a differential transmission manner. In this way, the anti-interference capability of the pulse signal may be improved.

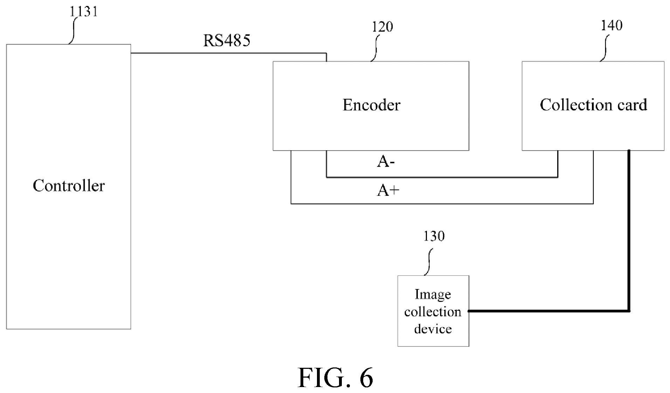

In some embodiments, an collection card 140 may be further included between the encoder 120 and the image collection device 130. As shown in FIG. 6, the encoder 120 may convert the pulse signal into differential signals A+ and A-, and then transmit A+ and A- to the collection card 140 of the image collection device 130, and then control the image collection device 130 to perform image collection through the collection card 140. The transmission quality of the image collection device 130 may be improved and the transmission speed may be maximized by setting the collection card 140.

In some embodiments, when sending the position of the magnetic levitation mover 111 to the encoder 120, the controller 1131 may also first calculate the position of the magnetic levitation mover 111 based on a preset check algorithm to obtain a first check code, and then send the position of the magnetic levitation mover 111 and the first check code to the encoder 120.

Correspondingly, when generating the pulse signal based on the received position of the magnetic levitation mover 111, the encoder 120 may first calculate the received position of the magnetic levitation mover 111 based on the preset check algorithm to obtain a second check code, compare the second check code with the received first check code, and generate the pulse signal based on the position of the magnetic levitation mover 111 in a case that the second check code is consistent with the first check code.

The controller 1131 and the encoder 120 use the same check algorithm, and the check algorithm may include a modbus rtu crc algorithm or the like, which is not specifically limited in this embodiment.

In this way, the accuracy and integrity of the position of the magnetic levitation mover 111 may be improved.

In some embodiments, the image collection device 130 may include a line scan camera, and the line scan camera is characterized by scanning line by line at a high speed at a certain frequency, thereby finally forming a complete image. Based on this, when performing image collection based on the pulse signal, the image collection device 130 may acquire one row of images each time one pulse is received, and in a case where the row height of the collected image is equal to the preset row height, the collected image is combined into one image, and the combined image is used as the image of the detection surface of the battery cell 100.

In this embodiment, the preset row height n may be calculated according to a distance between the first preset position and the second preset position, a scanning period error, and a resolution of the encoder 120 according to the following formula: 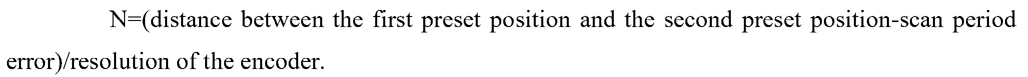 N=(distance between the first preset position and the second preset position-scan period error)/resolution of the encoder.

The scanning period error may be a ratio of the moving speed V1 of the magnetic levitation mover 111 to the preset time period.

In this way, the image collection device 130 may output the complete image of the detection surface of the battery cell 100 when the magnetic levitation mover 111 moves based on the pulse signal outputted by the encoder 120 in combination with the set preset row height, the outputted image is stable, and the object detected by the image collection device 130 completely corresponds to the real measurement object, which is beneficial to the accurate calibration of data.

### Data verification:

Taking the image collection device being a line scan camera as an example, a position 10 mm upstream of the line scan camera in the magnetic levitation guide rail is set as a first preset position A corresponding to the start position sensor through the magnetic drive coordinates, a corresponding point after a complete magnetic levitation mover passes through the line scan camera is set as a second preset position B corresponding to the end position sensor, a distance between the two positions A and B is 570 mm, the actual accuracy of the differential signal output by the encoder, that is, the A+ signal and the A- signal, is 8 µ, and it is theoretically calculated that the encoder can send 71250 pulses when the magnetic levitation mover moves between the two positions A and B. In practice, through the detection of the collection card software, the number of received pulses is 71248, and an error value is less than 0.1%, and under the same distance, the test shows that the error value of the actual number of pulses is within the range of 0.1% at different movement speeds of the magnetic levitation mover, and the error has no influence on the image output of the line scan camera. It can be seen that, by the pulse outputted when the magnetic levitation mover passes through the line scan camera, in combination with the preset line height set in the line scan camera system, the line scan camera may photograph the surface of the battery cell when the mover moves, the image is stable, and the camera detection object completely corresponds to the physical measurement object, which is beneficial to the accurate calibration of data, such that the defective product in the battery cell may be accurately detected based on the image collected by the line scan camera.

According to some embodiments of the present application, an inspection method for a film coating device is provided.

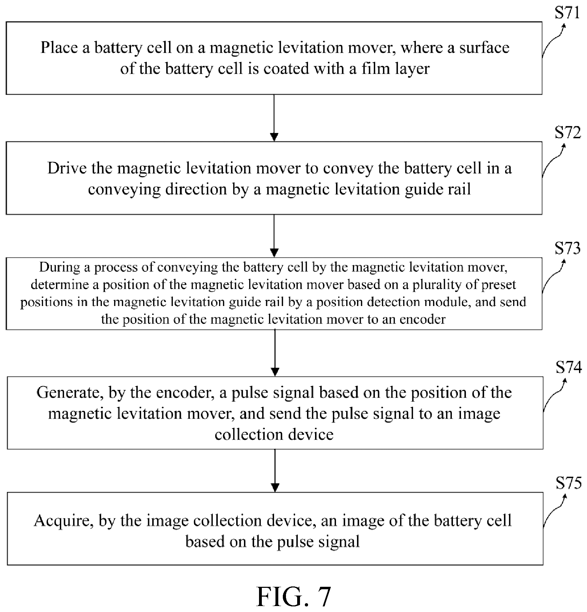

Referring to FIG. 7, FIG. 7 is a schematic flowchart of a film coating method according to some embodiments of the present disclosure. As shown in FIG. 7, the method may include the following steps:
S71, a battery cell is placed on a magnetic levitation mover, where a surface of the battery cell is coated with a film layer;
S72, the magnetic levitation mover is driven to convey the battery cell in the conveying direction through the magnetic levitation guide rail;
S73, during the process of conveying the battery cell by the magnetic levitation mover, the position of the magnetic levitation mover is determined based on the plurality of preset positions in the magnetic levitation guide rail by the position detection module, and the position of the magnetic levitation mover is sent to the encoder;
S74, the encoder generates a pulse signal based on the position of the magnetic levitation mover, and sends the pulse signal to the image collection device; and
S75, the image collection device acquires an image of the battery cell based on the pulse signal.

The magnetic drive conveying device is used to drive the battery cell to move, and during the movement of the battery cell, the position of the magnetic levitation mover is determined based on the preset position in the magnetic levitation guide rail, and the position of the magnetic levitation mover is transmitted to the encoder as the position of the battery cell, such that the encoder outputs a pulse signal based on the position change of the magnetic levitation mover to trigger the image collection device to perform image collection on the battery cell. Compared with a conventional manner of controlling the line scan camera to perform image collection on the battery cell based on the grating ruler and the grating encoder, the solution provided by the embodiment of the present application has a lower requirement on mounting accuracy, is easier to implement, and is less affected by the environment, such that the image outputted is more accurate, thereby improving the accuracy of battery cell inspection.

According to some embodiments of the present application, the position detection module includes a controller and a plurality of position sensors sequentially arranged in the magnetic levitation guide rail, the plurality of position sensors are in one to-one correspondence with a plurality of preset positions in the magnetic levitation guide rail, and the position sensors are configured to send induction signals when sensing the magnetic levitation mover;
determining, by the position detection module, the position of the magnetic levitation mover based on the plurality of preset positions in the magnetic levitation guide rail includes:
the controller uses a preset position corresponding to a last received induction signal as the position of the magnetic levitation mover, where the preset position corresponding to the induction signal is a preset position corresponding to the position sensor that sends the induction signal.

In the above manner, the position of the magnetic levitation mover may be detected.

According to some embodiments of the present application, the plurality of position sensors include a start position sensor and an end position sensor, and sending the position of the magnetic levitation mover to the encoder includes:
the position of the magnetic levitation mover is sent to the encoder once in each preset time period starting from the reception of the induction signal sent by the start position sensor, until the induction signal sent by the end position sensor is received.

In this way, the encoder may output the pulse signal to the image collection device from the position where the magnetic levitation mover reaches the first preset position to the position where the magnetic levitation mover reaches the second preset position, that is, the pulse signal is outputted by the encoder when the magnetic levitation mover passes through the image collection device, such that the image collection device may acquire a complete image of the battery cell during the movement of the magnetic levitation mover.

According to some embodiments of the present application, generating, by the encoder, the pulse signal based on the position of the magnetic levitation mover includes:
a displacement of the magnetic levitation mover is determined based on the position of the magnetic levitation mover in each preset time period;
a ratio of the displacement to a resolution of the encoder is determined as the number of pulses; and
a pulse signal corresponding to the number of pulses is generated.

In this way, the pulse signal corresponding to a displacement change of the battery cell may be obtained in each preset time period, such that the image collection device is controlled by the pulse signal to perform image collection on the battery cell at a certain frequency.

According to some embodiments of the present application, sending the pulse signal to the image collection device includes:
the pulse signal is sent to the image collection device in a differential transmission manner.

In this way, the anti-interference capability of the pulse signal may be improved.

According to some embodiments of the present application, sending the position of the magnetic levitation mover to the encoder includes:
the position detection module calculates the position of the magnetic levitation mover based on a preset check algorithm to obtain a first check code; and
the position of the magnetic levitation mover and the first check code are sent to the encoder;
generating, by the encoder, the pulse signal based on the position of the magnetic levitation mover includes:
   the encoder calculates the received position of the magnetic levitation mover based on the check algorithm to obtain a second check code;
   the second check code is compared with the received first check code; and
   a pulse signal is generated based on the position of the magnetic levitation mover in a case where the second check code is consistent with the first check code.

In this way, the accuracy and integrity of the position of the magnetic levitation mover may be improved.

According to some embodiments of the present application, the image collection device includes a line scan camera, and collecting, by the image collection device, the image of the detection surface of the battery cell based on the pulse signal includes:
the image collection device acquires one row of images each time one pulse is received;
in a case where a row height of the collected image is equal to a preset row height, the collected images are formed into an image; and
the formed image is used as the image of the detection surface of the battery cell.

In this way, the pulse signal output by the encoder when the magnetic levitation mover passes through the image collection device is combined with the set preset row height, so that the image collection device 130 outputs a complete image of the detection surface of the battery cell 100 when the magnetic levitation mover 111 moves, the outputted image is stable, and the object detected by the image collection device 130 completely corresponds to the real measurement object, which is beneficial to the accurate calibration of data.

According to some embodiments of the present application, prior to collecting, by the image collection device, the image of the detection surface of the battery cell based on the pulse signal, the method further includes:
a fourth distance between the start position sensor and the end position sensor is determined;
a scanning error of the image collection device is collected; and
the preset row height of the image collection device is determined based on the fourth distance, the scanning error, and the resolution of the encoder.

In this way, the image collection device may output a complete and accurate battery cell image.

It should be clear that the present application is not limited to the specific configurations and processes described above and shown in the figures. For the sake of brevity, detailed descriptions of known methods are omitted herein. In the above embodiments, several specific steps are described and shown as examples. However, the method processes of the embodiments of the present application are not limited to the specific steps described and shown. Those skilled in the art may make various changes, modifications, and additions, or change the order of the steps after grasping the spirit of the present application.

It should also be noted that the exemplary embodiments mentioned in present application describe some methods or systems based on a series of steps or apparatuses. However, present application is not limited to the order of the above steps. That is, the steps may be executed in the order mentioned in the embodiments, or in an order different from that in the embodiments, or several steps may be executed simultaneously.

The various aspects of the present disclosure have been described above with reference to the flow charts and/or block diagrams of the methods, apparatuses (systems), and computer program products according to the embodiments of the present disclosure. It should be understood that each block in the flow charts and/or block diagrams, as well as combinations of the blocks in the flow charts and/or block diagrams, may be implemented by computer program instructions. These computer program instructions may be provided to a processor of a general-purpose computer, a dedicated computer, or other programmable data processing apparatus to produce a machine, such that these instructions, when executed by the processor of the computer or another programmable data processing apparatus, enable the implementation of the functions/actions specified in one or more blocks of the flow charts and/or block diagrams. Such a processor may be, but is not limited to, the general-purpose processor, the dedicated processor, a special application processor, or a fieldprogrammable logic circuit. It is also understandable that each block in the block diagrams and/or flow charts, as well as combinations of the blocks in the block diagrams and/or flow charts, may also be implemented by a dedicated hardware that performs specified functions or actions, or may be implemented by a combination of the dedicated hardware and computer instructions.

The above are only the specific implementations of the present application. Those skilled in the art may clearly understand that, for the convenience and brevity of description, for the specific working processes of the system, modules, and units described above, the corresponding processes in the foregoing method embodiments may be referred to, and details are not repeated herein. It should be understood that the protection scope of the present application is not limited thereto, and any one skilled in the art may easily conceive of various equivalent modifications or replacements within the technical scope disclosed in the present application, and these modifications or replacements are all included in the protection scope of the present application.

## Claims

1. A film coating device, comprising: a magnetic drive conveying device, an encoder, and an image collection device, wherein
the magnetic drive conveying device comprises: a magnetic levitation mover, a magnetic levitation guide rail, and a position detection module;
the magnetic levitation mover is configured to carry a battery cell, and a surface of the battery cell is coated with a film layer;
the magnetic levitation guide rail is configured to drive the magnetic levitation mover to convey the battery cell in a conveying direction;
the magnetic levitation guide rail is provided with a plurality of preset positions in the conveying direction;
the position detection module is configured to determine a position of the magnetic levitation mover based on the plurality of preset positions and send the position of the magnetic levitation mover to the encoder during the process of conveying the battery cell by the magnetic drive conveying device;
the encoder is configured to generate a pulse signal based on the position of the magnetic levitation mover, and send the pulse signal to the image collection device; and
the image collection device is configured to acquire an image of the battery cell based on the pulse signal.

2. The device according to claim 1, wherein the position detection module comprises a controller and a plurality of position sensors arranged in sequence along the magnetic levitation guide rail, and the plurality of position sensors are in one to-one correspondence with the plurality of preset positions of the magnetic levitation guide rail;
the position sensor is configured to send an induction signal to the controller when sensing the magnetic levitation mover; and
the controller is configured to use a preset position corresponding to a last received induction signal as the position of the magnetic levitation mover, and send the position of the magnetic levitation mover to the encoder, wherein the preset position corresponding to the induction signal is a preset position corresponding to a position sensor that sends the induction signal.

3. The device according to claim 2, wherein the image collection device is disposed on a side surface of the magnetic drive conveying device, and an optical axis of the image collection device is perpendicular to and intersects with a detection surface of the battery cell;
the plurality of position sensors comprise a start position sensor and an end position sensor;
the start position sensor is mounted at a first preset position of the magnetic levitation guide rail, the first preset position is on an upstream side of an image collection position, a distance between the first preset position and the image collection position is a first distance, and the image collection position is a position where the magnetic levitation guide rail intersects with a parallel line of the optical axis of the image collection device;
the end position sensor is mounted at a second preset position of the magnetic levitation guide rail, the second preset position is on a downstream side of the image collection position, a distance between the second preset position and the image collection position is a second distance, and the second distance is greater than or equal to a length of the detection surface of the battery cell; and
the controller is further configured to send the position of the magnetic levitation mover to the encoder once in each preset time period starting from the reception of an induction signal sent by the start position sensor, until an induction signal sent by the end position sensor is received.

4. The device according to claim 3, wherein the encoder is further configured to determine a displacement of the magnetic levitation mover based on the received position of the magnetic levitation mover in each preset time period, and generate a pulse signal corresponding to the number of pulses by using a ratio of the displacement to a resolution of the encoder as the number of pulses.

5. The device according to any one of claims 2 to 4, wherein the controller is further configured to calculate the position of the magnetic levitation mover based on a preset check algorithm to obtain a first check code, and send the position of the magnetic levitation mover and the first check code to the encoder; and
the encoder is further configured to: calculate the received position of the magnetic levitation mover based on the check algorithm to obtain a second check code, compare the second check code with the received first check code, and generate a pulse signal based on the position of the magnetic levitation mover in a case where the second check code is consistent with the first check code.

6. The method according to any one of claims 1 to 5, wherein the image collection device comprises a line scan camera; and
the image collection device is further configured to acquire one row of images each time one pulse is received, and in a case where a row height of the collected images is equal to a preset row height, combine the collected images into one image, and use the combined image as an image of the detection surface of the battery cell.

7. The device according to claim 1, further comprising a core-assembling feeding station, a Mylar hot-melt coating station, a gluing station, a shell feeding station, and a feeding station which are sequentially arranged around the magnetic levitation guide rail in the conveying direction.

8. The device according to claim 7, wherein a pre-Mylar coating visual inspection station is disposed between the core-assembling feeding station and the Mylar coating hot-melt station; and
the pre-Mylar coating visual inspection station comprises two image collection devices arranged opposite to each other on both sides of the magnetic levitation guide rail.

9. The device according to claim 7 or 8, wherein a post-Mylar coating visual inspection station is disposed between the gluing station and the shell feeding station; and
the post-Mylar coating visual inspection station comprises two image collection devices arranged opposite to each other on both sides of the magnetic levitation guide rail.

10. The device according to any one of claims 2 to 5, wherein the controller is communicatively connected to the encoder by using a communication interface RS485.

11. The device according to any one of claims 1 to 10, wherein the encoder sends the pulse signal to the image collection device in a differential transmission manner.

12. The device according to claim 11, further comprising an collection card disposed between the encoder and the image collection device, and the encoder converts the pulse signal into a differential signal and then transmits the differential signal to the collection card, and the collection card controls the image collection device to perform image collection.

13. A film coating method, comprising:
placing a battery cell on a magnetic levitation mover, wherein a surface of the battery cell is coated with a film layer;
driving the magnetic levitation mover to convey the battery cell in a conveying direction by a magnetic levitation guide rail;
during a process of conveying the battery cell by the magnetic levitation mover, determining a position of the magnetic levitation mover based on a plurality of preset positions in the magnetic levitation guide rail by a position detection module, and sending the position of the magnetic levitation mover to an encoder;
generating, by the encoder, a pulse signal based on the position of the magnetic levitation mover, and sending the pulse signal to an image collection device; and
collecting, by the image collection device, an image of the battery cell based on the pulse signal.

14. The method according to claim 13, wherein the position detection module comprises a controller and a plurality of position sensors arranged in sequence along the magnetic levitation guide rail, the plurality of position sensors are in one to-one correspondence with a plurality of preset positions in the magnetic levitation guide rail, and the position sensors are configured to send an induction signal when sensing the magnetic levitation mover; and
determining, by the position detection module, the position of the magnetic levitation mover based on the plurality of preset positions in the magnetic levitation guide rail comprises:
using, by the controller, a preset position corresponding to a last received induction signal as the position of the magnetic levitation mover, wherein the preset position corresponding to the induction signal is a preset position corresponding to the position sensor that sends the induction signal.

15. The method according to claim 14, wherein the plurality of position sensors comprise a start position sensor and an end position sensor, and sending the position of the magnetic levitation mover to the encoder comprises:
sending the position of the magnetic levitation mover to the encoder once in each preset time period starting from the reception of the induction signal sent by the start position sensor, until the induction signal sent by the end position sensor is received.

16. The method according to claim 15, wherein generating, by the encoder, a pulse signal based on the position of the magnetic levitation mover comprises:
determining a displacement of the magnetic levitation mover based on the position of the magnetic levitation mover in each preset time period;
determining a ratio of the displacement to a resolution of the encoder as the number of pulses; and
generating a pulse signal corresponding to the number of pulses.

17. The method according to any one of claims 13 to 16, wherein sending the pulse signal to the image collection device comprises:
sending the pulse signal to the image collection device in a differential transmission manner.

18. The method according to any one of claims 13 to 17, wherein sending the position of the magnetic levitation mover to the encoder comprises:
calculating, by the position detection module, the position of the magnetic levitation mover based on a preset check algorithm to obtain a first check code; and
sending the position of the magnetic levitation mover and the first check code to the encoder;
generating, by the encoder, the pulse signal based on the position of the magnetic levitation mover comprises:
calculating, by the encoder, the received position of the magnetic levitation mover based on the check algorithm to obtain a second check code;
comparing the second check code with the received first check code; and
generating a pulse signal based on the position of the magnetic levitation mover in a case where the second check code is consistent with the first check code.

19. The method according to any one of claims 13 to 18, wherein the image collection device comprises a line scan camera, and collecting, by the image collection device, an image of a detection surface of the battery cell based on the pulse signal comprises:
collecting, by the image collection device, one row of images each time one pulse is received;
in a case where a row height of the collected image is equal to a preset row height, forming the collected images into an image; and
using the formed image as the image of the detection surface of the battery cell.

20. The method according to any one of claims 15 to 19, wherein prior to collecting, by the image collection device, the image of the detection surface of the battery cell based on the pulse signal, the method further comprises:
determining a fourth distance between the start position sensor and the end position sensor;
collecting a scanning error of the image collection device; and
determining the preset row height of the image collection device based on the fourth distance, the scanning error, and the resolution of the encoder.
